# EUROPÄISCHE PATENTANMELDUNG

(11) **EP 2 738 078 A1**
(43) Veröffentlichungstag der Anmeldung: **04.06.2014**
(21) Anmeldenummer: 13189637.5
(22) Anmeldetag: 22.10.2013
(51) Int. Cl.: B62L 3/08

(54) **Überschlagverhinderungssystem für Zweiräder**

(30) Priorität: 03.12.2012 DE 102012222072
(71) Anmelder: ROBERT BOSCH GMBH, 70442 Stuttgart (DE)
(72) Erfinder: Verhagen, Armin, 71701 Schwieberdingen (DE); Motschenbacher, Christian, 74232 Abstatt (DE)

(57) **Zusammenfassung**

Es wird eine Vorrichtung zum Verhindern eines Abhebens eines Hinterrads (70) eines Zweirads von der Fahrbahn bereitgestellt. Die Vorrichtung umfasst wenigstens eine schwingende Einheit (80), die mit der einen Seite drehbar an der Nabe des Hinterrades (70) eines Zweirades angebracht ist und an der zweiten Seite mit der Bremse (40) des Hinterrades (70) verbunden ist. Außerdem umfasst die erfindungsgemäße Vorrichtung wenigstens einen Zylinder (90), welcher an der wenigstens einen schwingenden Einheit (80) angebracht ist und der über eine Leitung (100) mit der Bremse (110) des Vorderrades (140) des Zweirades verbunden ist. Des Weiteren umfasst die Vorrichtung wenigstens eine Feder (55), die zwischen der schwingenden Einheit (80) und der Radaufhängung (45) angebracht ist.

## Beschreibung

Die vorliegende Erfindung betrifft eine Vorrichtung zum Verhindern des Abhebens eines Rades, insbesondere eine Vorrichtung zum Verhindern des Abhebens des Hinterrads von Zweirädern.

### Stand der Technik

Einfache Zweiräder wie Fahrräder erfreuen sich sehr großer Beliebtheit. Durch die gesteigerten Anforderungen an diese Zweiräder werden diese immer weiter verbessert. Mittlerweile gibt es neben den mechanischen Zweirädern, die rein durch Muskelkraft betrieben werden, immer mehr Varianten, die zumindest teilweise mit elektrischen Antrieben kombiniert werden. Beispiele hierfür sind so genannte E-Bikes. Die vorliegende Erfindung kann jedoch auch bei kleinen motorisierten Zweirädern eingesetzt werden.

Durch allerlei Verbesserungen ist eine zunehmende Durchschnittsgeschwindigkeit dieser Zweiräder möglich. Dadurch werden jedoch auch immer höhere Anforderungen an die Bremssysteme gestellt.

Im Stand der Technik sind daher Bremssysteme bekannt, die mit Scheiben-, Trommel-, und Felgenbremsen arbeiten, die mit Seilzug oder hydraulisch betätigt werden. Im Falle einer Rücktrittbremse wird die Betätigung über die Antriebskette realisiert.

Wenn bei einem Fahrrad der Bremshebel am Lenker betätigt wird, wird der Bremsvorgang eingeleitet. Wenn an dem Bremshebel gezogen wird, werden in den meisten Fällen ein oder mehrere Bremsklötze an die Felge oder die Nabe des Rades gepresst. Im Beispiel der häufig verwendeten Felgenbremse werden unter anderem Seilzugbremsen und hydraulische Bremsen verwendet.

Einfache Systeme zur Bremskraftbegrenzung sind beispielsweise Kraftbegrenzung im Seilzug oder eine indirekte Kraftbegrenzung über die Einstellung des Betätigungswegs am Bremshebel.

Damit die Bremssysteme während des Bremsvorgangs nicht blockieren, wurden einfache mechanische Blockierverhinderer entwickelt. Jedoch konnten sich keine dieser Systeme bisher durchsetzen.

Die modernen Felgen- und Scheibenbremsen weisen heutzutage eine immer bessere und vor allem schnellere Bremsleistung auf. Das bedeutet, dass die heutigen Bremssysteme immer höhere Bremsverzögerungen erreichen.

Bei einer verbesserten Bremsleistung kann es jedoch passieren, dass es immer häufiger zu Stürzen des Fahrers über den Lenker und somit zu schweren Verletzungen kommt.

Zusätzlich dazu werden durch den elektrischen Antrieb bei Zwei- bzw. Fahrrädern immer höhere Durchschnittsgeschwindigkeiten erreicht. Dadurch steigt natürlich das Unfallrisiko bei diesen sogenannten E-Bikes.

### Offenbarung der Erfindung

Die Erfindung schlägt unter einem ersten Aspekt gemäß Anspruch 1 eine Vorrichtung zum Verhindern eines Abhebens des Hinterrads eines Zweirads von der Fahrbahn vor.

Beim oben genannten Beispiel einer Felgenbremse bei einem Zweirad werden bei Betätigung des Bremshebels am Lenker die beiden Bremsarme der Bremse geschlossen. Durch die entstehende Reibung wird das Fahrrad verzögert. Ist die Verzögerung am Vorderrad zu groß, hebt das Hinterrad von der Fahrbahn ab und das gesamte Zweirad droht, sich über den Vorderlenker zu überschlagen.

Um dies zu unterbinden, umfasst die erfindungsgemäße Vorrichtung wenigstens eine schwingende Einheit, die mit der einen Seite drehbar an der Nabe des Hinterrades eines Zweirades befestigt ist und an der anderen Seite mit der Bremse des Hinterrades verbunden ist.

Wird nun mit dem Bremshebel der Bremsvorgang eingeleitet, wird zunächst die Bremse aktiviert. Dabei bewegen sich die Bremsklötze des Hinterrades an die Felge. Da die eine Seite der schwingenden Einheit mit der Hinterradbremse verbunden ist, beispielsweise an den Bremsklötzen, wird sich die schwingende Einheit auch mit den Bremsklötzen in (Vorwärts-Fahrt-) Richtung des sich drehenden Rades mitbewegen.

Weiter umfasst die erfindungsgemäße Vorrichtung wenigstens einen Zylinder, welcher an der wenigstens eine schwingende Einheit angebracht ist.

Wenn nun durch den Bremsvorgang die Bremsklötze gegen die Felge gedrückt werden und dadurch die schwingende Einheit mit beispielsweise gegen den Uhrzeigersinn, d.h. bei Vorwärts-Fahrtrichtung, bewegt werden, wird der Kolben des daran angebrachten Zylinders in das Innere des Zylinders gedrückt und es baut sich in dem Zylinder ein Druck auf.

Der wenigstens eine Zylinder ist über eine Leitung mit der Bremse des Vorderrades des Zweirades verbunden. Dadurch kann der Zylinder den durch die sich in Richtung Felge bewegende schwingende Einheit aufgebauten Druck über die Leitung an die Vorderradbremse weitergeben, d.h. bei Vorwärts-Fahrtrichtung.

Die Vorderradbremse wird dadurch auch betätigt. Das bedeutet, die Bremsklötze der Vorradbremse werden gegen die Felge des Vorderrades gedrückt und das Vorderrad wird abgebremst.

Weiter umfasst die Vorrichtung wenigstens eine Feder, die zwischen der schwingenden Einheit und der Radaufhängung angebracht ist.

Wenn nun das Hinterrad von der Fahrbahn abhebt, beispielsweise, weil die Bremsleistung am Vorderrad zu hoch ist, zieht diese Feder die schwingende Einheit wieder zurück.

Gleichzeitig wird der Kolben aus dem an der schwingenden Einheit befestigten Zylinder herausgezogen und ein Unterdruck entsteht in dem Zylinder und in der Folge auch in der Leitung. Somit löst sich die Vorradbremse, die über die Leitung mit dem Zylinder verbunden ist.

Daraufhin kann sich das Hinterrad wieder auf die Fahrbahn absenken, die Hinterradbremse fängt wieder zu bremsen an. In der Folge wird auch das Vorderrad wieder abgebremst. Dieser Vorgang wiederholt sich so lange bis das Hinterrad des Zweirads sich nicht mehr von der Fahrbahn abhebt, oder das Zweirad zum stehen kommt.

Die erfindungsgemäße Vorrichtung für jede Art von Trommel, Scheiben und Felgenbremse geeignet, vorzugsweise jedoch für hydraulische Bremsen.

Eine hydraulische Bremse bezeichnet eine Bremse, deren Kraftübertragung hydraulisch, das heißt über eine Flüssigkeit in einer Leitung, erfolgt. Hydraulikbremsen überzeugen mit deutlich besseren Eigenschaften, als die herkömmlichen mechanischen Bremsen. So sind sie deutlich besser dosierbar und haben eine höhere Bremskraft.

Dabei ist der Bremshebel über hydraulische Leitung mit zwei Bremsarmen verbunden, welche auf beiden Seiten der Felge des Rades angeordnet sind. Beim Bremsen werden gegenüberliegende Beläge aus Sintermaterial auf die beiden Felgenflanken gepresst, so dass durch Reibung eine Bremswirkung entsteht. Felgenbremsen sind sowohl für einfache Alltagsräder als auch für den Leistungssportbereich geeignet. Bei den Felgenbremsen unterscheidet man zwischen Systemen mit nur einem Befestigungspunkt über dem Reifen und zweiteiligen Systemen mit zwei Befestigungspunkten beiderseits der Felge.

### Vorteile der Erfindung

Der Vorteil der vorgeschlagenen Vorrichtung ergibt sich daraus, dass der Bremsweg aufgrund optimaler Bremskraftverteilung und Unterstützung verkürzt und gleichzeitig ein Überschlag bzw. Überschlagen des Fahrers über den Vorderlenker verhindert wird.

Außerdem verhindert die erfindungsgemäße Vorrichtung ein Blockieren des Vorderrades. Dies führt weiter dazu, dass ein Wegrutschen der Räder verhindert wird und dadurch Stürze vermieden und die Fahreigenschaften des Zweirades verbessert werden.

Vorzugsweise umfasst wenigstens eine der schwingenden Einheiten eine Schwinge und wenigstens einer der Zylinder einen hydraulischen Zylinder.

Weiterhin wird bevorzugt, dass wenigstens eine Leitung zwischen dem Zylinder und der Bremse des Vorderrads eine hydraulische Leitung ist. Dadurch kann der Druck direkt an die hydraulische Vorderradbremse weitergegeben werden.

Durch die vorgenannten Vorteile von hydraulischen Bremsen ist es wünschenswert, die erfindungsgemäße Vorrichtung für eine Hydraulikbremse bereitzustellen.

### Kurze Beschreibung der Zeichnungen

Nachfolgend wird die Erfindung anhand einer Ausführungsform in Verbindung mit der Figuren erläutert, wobei:

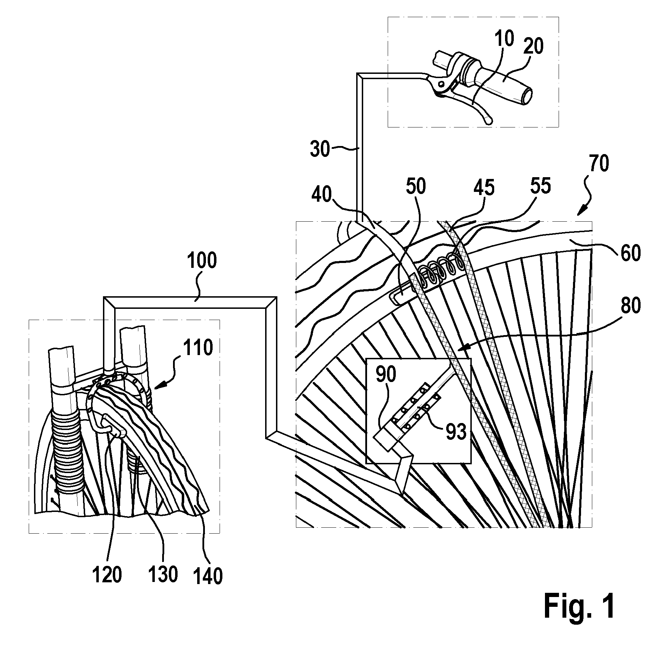

Figur 1 eine schematische Darstellung einer Ausführungsform der erfindungsgemäßen Vorrichtung zeigt.

### Ausführungsformen der Erfindung

Figur 1 zeigt eine schematische Darstellung einer Ausführungsform der Vorrichtung zum Verhindern, dass sich das Hinterrad eines Zweirades von der Fahrbahn abhebt.

Wenn der Bremshebel 10 an den Griff 20 des Lenkers des Zweirades gedrückt wird, wird bei dem Zweirad der Bremsvorgang eingeleitet. Über die Bremsleitung 30 wird die Bremse 40 ausgelöst. Dabei kann die Bremse 40 eine Seilzugbremse oder auch eine Hydraulikbremse sein. In Figur 1 ist eine Hydraulikbremse dargestellt.

Hier wird der Druck der beim Bremshebel 10 aufgebaut wird, über eine Hydraulikleitung 30 an die Bremsbacken 50 weitergeleitet. Daraufhin werden die Bremsbacken 50 an die Felge 60 des Hinterrads 70 des Fahrrads gedrückt. Daraufhin wird das Fahrrad verzögert.

Die Felgenbremse 40 schließt und die Schwinge 80, die an den Bremsbacken befestigt ist, wird nach links gedrückt. Mit anderen Worten, die Schwinge 80 dreht sich dann nach links bzw. gegen den Uhrzeigersinn.

An der Schwinge 80 ist der Kolben 93 eines hydraulischen Zylinders 90 befestigt. Wenn nun der hydraulische Zylinder 90 selbst ortsfest beispielsweise an dem Rahmen des Fahrrads befestigt ist, baut sich durch die Bewegung des Kolbens 93 in dem Hydraulikzylinder 90 ein Druck auf.

Der Drehbereich der Schwinge 80 nach links bzw. gegen den Uhrzeigersinn wird durch den Weg des Kolbens 93 innerhalb des Hydraulikzylinders 90 begrenzt.

Durch die Linksdrehung der Schwinge 80 wird nun der Hydraulikzylinder 93 betätigt und der Kolben 93, der in den Hydraulikzylinder 90 einfährt, drückt die in dem Hydraulikzylinder 90 befindliche Bremsflüssigkeit in die Bremsleitung 100.

Der in dem Hydraulikzylinder 90 aufgebaute Druck wird nun über die Bremsleitung 100 an die Vorderradbremse 110 weitergegeben Die Vorderradbremse ist vorzugsweise eine Hydraulikbremse und deshalb bewirkt der Druck aus der Bremsleitung 100, dass bei der Vorderradbremse 110 die Bremsklötze 120 gegen die Felge 130 gedrückt werden. Dadurch wird die Vorderradbremse 110 aktiviert und das Vorderrad abgebremst.

Ist die Bremsleistung am Vorderrad 140 zu hoch, hebt sich das Hinterrad 70 vom Boden ab, und ein Überschlag droht.

Zwischen der Schwinge 80 und der Radaufhängung 45 ist eine Feder 55 angeordnet.

Wenn das Hinterrad 70 von der Fahrbahn abhebt, zieht die Feder 55 die Schwinge 50 wieder zurück, d.h. nach rechts bzw. im Uhrzeigersinn.

Gleichzeitig zieht die Schwinge 80 den an ihr angebrachten Kolben 93 des Hydraulikzylinders 90 heraus und löst somit die hydraulische Vorderradbremse 110. Dadurch kann sich das Vorderrad 140 wieder besser drehen und der Überschlag bzw. das Abheben des Hinterrads 70 von der Fahrbahn wird vermieden.

Das Resultat ist, dass das Hinterrad 70 wieder auf den Boden zurückfällt und die Hinterradbremse 40 erneut anfängt zu bremsen und somit auch wieder das Vorderrad 140 bremst. Dieser Vorgang geht so lange vor sich, bis das Hinterrad nicht mehr vom Boden abhebt oder das Fahrrad nicht mehr fährt.

Alle erwähnten Bremssysteme sind sowohl für Trommelbremsen, als auch für Scheibenbremsen und Felgenbremsen geeignet.

Die vorliegende Erfindung ist nicht auf das hier vorgestellten Ausführungsbeispiel beschränkt, sondern lässt sich auch gemäß dem Gegenstand der Erfindung modifizieren.

## Patentansprüche

1. Vorrichtung zum Verhindern eines Abhebens eines Hinterrad (70) eines Zweirads von einer Fahrbahn, umfassend:
wenigstens eine schwingende Einheit (80), die mit der einen Seite drehbar an der Nabe des Hinterrades (70) eines Zweirades angebracht ist und an der zweiten Seite mit der Bremse (40) des Hinterrades (70) angebracht ist;
wenigstens einen Zylinder (90), welcher an der wenigstens einen schwingenden Einheit (80) angebracht ist und der über eine Leitung (100) mit der Bremse (110) des Vorderrades (140) des Zweirades verbunden ist.

2. Vorrichtung nach Anspruch 1, wobei wenigstens eine der schwingenden Einheiten (80) eine Schwinge ist.

3. Vorrichtung nach einem der vorangehenden Ansprüche, wobei wenigstens einer der Zylinder (90) ein hydraulischer Zylinder ist.

4. Vorrichtung nach einem der vorangehenden Ansprüche, wobei wenigstens eine Leitung (100) zwischen dem Zylinder (90) und der Bremse des Vorderrades (140) eine hydraulische Leitung ist.

5. Vorrichtung nach einem der vorangehenden Ansprüche umfassend wenigstens eine Feder (55), die zwischen der schwingenden Einheit (80) und einer Radaufhängung (45) angebracht ist.
